# EUROPEAN PATENT APPLICATION

(11) **EP 2 432 104 A1**
(43) Date of publication of application: **21.03.2012**
(21) Application number: 09823249.9
(22) Date of filing: 16.10.2009
(51) Int. Cl.: H02K 33/02, H02K 7/06, H02K 33/16

(54) **MAGNETIC FORCE INTENSIFYING ELECTROMAGNETIC DRIVING DEVICE**

(30) Priority: 14.05.2009 JP 2009117417
(71) Applicant: Kaneko, Fumiko, Ibaraki 308-0857 (JP)
(72) Inventor: KANEKO, Yasuo, Chikusei-si Ibaraki 308-0857 (JP)
(74) Representative: Graf Glück Habersack Kritzenberger
(86) International application number: PCT/JP2009/005410
(87) International publication number: WO 2010/050135

(57) **Abstract**

While such drive system of prior art is suitable for back-and-forth linear movement or rotational movement so far as it is not expected to obtain a large drive force, it impossible for such system of prior art to obtain a desired large drive force when such system of prior art is used for the purpose of generating a large torque. In view of the problem as has been described above, it is a principal object of the present invention to provide an electromagnetic drive system improved to solve the aforementioned problem.

The object set forth above is achieved by a magnetic force intensifying drive system arranged so that polarities of at least one of a movable magnet 6 and stationary magnets 4, 5 may be inverted to achieve continuous rotary movement or back-and-forth movement of the movable magnet 6 relatively to the stationary magnets 4, 5, **characterized in that** the movable magnet 6 or the stationary magnets 4, 5 is or are provided with permanent magnets 16, 17 serving for intensification of magnetic force.

## Description

### Technical field

The present invention relates to a magnetic force intensifying electromagnetic drive system.

### Related field

The electromagnetic drive system adapted to move the movable ferromagnetic body against the spring in the direction of attraction by exciting the stationary electromagnetic coil and to move the movable ferromagnetic body released from attractive force in the opposite direction under the biasing effect of the spring by degaussing the stationary electromagnetic coil so that the movable ferromagnetic body may be back-and-forth linearly moved has already been proposed (See Japanese Patent Application Laid-Open Publication No. 2000-45934).

The electromagnetic drive system adapted to invert the magnetic polarity of at least one of the rotationally movable magnet and the stationary magnet surrounding this movable magnet and thereby to achieve rotation of the movable magnet relative to the stationary magnet is also well known.

### SUMMARY OF THE INVENTION

### Problem to be solved by the invention

While such drive system of prior art is suitable for back-and-forth linear movement or rotational movement so far as it is not expected to obtain a large drive force, it impossible for such system of prior art to obtain a desired large drive force when such system of prior art is used for the purpose of generating a large torque. In view of the problem as has been described above, it is a principal object of the present invention to provide an electromagnetic drive system improved to solve the aforementioned problem.

### Measure to solve the problem

The object set forth above is achieved, according to the present invention, by improvement in the magnetic force intensifying electromagnetic drive system adapted to achieve continuous rotation or back-and-forth movement of a movable magnet relative to a stationary magnet by inverting polarities of at least one of the movable magnet and the stationary magnet, the magnetic force intensifying electromagnetic drive system being **characterized in that** the movable magnet or the stationary magnet is provided with a magnetic force intensifying permanent magnet, as described in Claim 1.

The present invention includes an embodiment wherein the movable magnet or the stationary magnet to be polarity-inverted is provided in the form of an electromagnet including a coil wound therearound so that coil current direction may be inverted or coil current may be turned on or off to invert the polarity, as described in Claim 2.

The present invention includes an embodiment wherein the movable magnet or the stationary magnet provided in the form of electromagnet including magnetic force intensifying permanent magnet, as described in Claim 3.

The present invention includes an embodiment wherein the magnetic force intensifying permanent magnet is provided with ferromagnetic body, as described in Claim 4.

The present invention includes an embodiment wherein the movable magnet is back-and-forth movably arranged relatively to the stationary magnet and provided with a spring mechanism serving to bias the movable magnet in a direction of inversion and the system further comprises a polarity switching mechanism provided in the vicinity of the stationary magnet serving to switch the polarity of the movable magnet or the stationary magnet and a movement converter mechanism serving to convert back-and-forth linear movement of the movable magnet to rotary movement in one direction, as described in Claim 5.

The present invention includes an embodiment wherein the movable magnet and the stationary magnet are arranged one-on-one, as described in Claim 6.

The present invention includes an embodiment wherein the single movable magnet is provided between a pair of the stationary magnet, as described in Claim 7.

The present invention includes an embodiment wherein the movement converter mechanism comprises a crank mechanism adapted to interlock with the movable magnet and thereby to convert the back-and-forth linear movement to the rotary movement in one direction, as described in Claim 8.

The present invention includes an embodiment wherein the movement converter mechanism comprises a crank mechanism adapted to amplify the linear back-and-forth movement of the movable magnet and then to convert the linear back-and-forth movement to the rotary movement, as described in Claim 9.

The present invention includes an embodiment wherein the movement converter mechanism comprises a rack-and-pinion mechanism adapted to convert the back-and-forth linear movement to the rotary movement in one direction, as described in Claim 10.

The present invention includes an embodiment wherein the movable magnet is back-and-forth movably arranged relatively to the stationary magnet and the movable magnet is provided on its rotary shaft with a permanent magnet and along its outer periphery with an electromagnet so that the polarity of the electromagnet may be inverted to rotate the movable magnet relative to the stationary magnet, as described in Claim 11.

The present invention includes an embodiment wherein the movable magnet provided in the form of a permanent magnet so as to cooperate with the stationary magnet provided in the form of an electromagnet and the system further includes, in the vicinity of the stationary magnet, a magnetic force intensifying permanent magnet adapted to be reversibly rotated in synchronization with polarity inversion of the electromagnet, as described in Claim 12.

The present invention includes an embodiment wherein one of the stationary magnet and the movable magnet is provided in the form of an electromagnet, as described in Claim 13.

The present invention includes an embodiment wherein the rotary movement is used to drive a generator unit, as described in Claim 14.

### Effect of the invention

According to an embodiment according to the present invention defined by Claim 1, the movable magnet or the stationary magnet is provided with a magnetic force intensifying permanent magnet. With such arrangement, the magnetic force generated in the electromagnet can be intensified by the magnetic force of the permanent magnet so that the magnetic force further powerful than that the magnetic force generated in the electromagnet supplied with electric power and the correspondingly further powerful drive force can be obtained.

According to another embodiment of the present invention defined by Claim 2, the movable magnet or the stationary magnet to be polarity-inverted is provided in the form of an electromagnet including a coil wound therearound so that coil current direction may be inverted or coil current may be turned on or off to invert the polarity, as described in Claim 2. With this arrangement, the coil may be supplied with electric power in one direction to obtain a magnetic force intensified by the permanent magnet and the coil may be supplied with electric power in the opposite direction or the electric power is supplied to the coil may be turned off to invert the magnetic force direction in the opposite direction or to may be damped.

According to another embodiment of the present invention defined by Claim 3, the movable magnet or the stationary magnet provided in the form of electromagnet including magnetic force intensifying permanent magnet. With this arrangement, the polarity of the permanent magnet can be inverted in response to inversion of the electromagnet polarity and therefore the powerful magnetic force can be maintained even when the polarity of the electromagnet is inverted. In this way, the desired powerful drive force can be maintained.

According to another embodiment of the present invention defined by Claim 4, the magnetic force intensifying permanent magnet is provided with ferromagnetic body. With this arrangement, the ferromagnetic body such as iron plate not only further intensifies the magnetic power but also enlarges a magnetically attractive area. In this way, the desired powerful drive force is assured.

According to another embodiment of the present invention defined by Claim 5, the movable magnet is back-and-forth movably arranged relatively to the stationary magnet and provided with a spring mechanism serving to bias the movable magnet in a direction of inversion and the system further comprises a polarity switching mechanism provided in the vicinity of the stationary magnet serving to switch the polarity of the movable magnet or the stationary magnet and a movement converter mechanism serving to convert back-and-forth linear movement of the movable magnet to rotary movement in one direction. With this arrangement, the back-and-forth movement of the movable magnet is intensified and thereby the rotary movement thereof is correspondingly intensified.

According to another embodiment of the present invention defined by Claim 6, the movable magnet and the stationary magnet are arranged one-on-one. The polarity switching mechanism makes it possible to simplify manufacturing of the system according to the present invention by providing the movable magnet or the stationary magnet in the form of an electromagnet and merely by switching the polarity thereof.

According to another embodiment of the present invention defined by Claim 7, the single movable magnet is provided between a pair of the stationary magnet. With this arrangement, a powerful attractive force generated between the movable magnet and the stationary magnets on both sides of the movable magnet cooperates with the spring member having a biasing force the well compatible with the aforementioned attractive force, on one hand, and a powerful repulsive force between the movable magnet and the stationary magnets, on the other hand, assure that the movable magnet can be driven by the uniform drive force on both the forward stroke and the backward stroke of the back-and-forth linear movement of the movable magnet.

According to another embodiment of the present invention defined by Claim 8, the movement converter mechanism comprises a crank mechanism adapted to interlock with the movable magnet and thereby to convert the back-and-forth linear movement to the rotary movement in one direction. With this arrangement, the back-and-forth linear movement of the movable magnet can be easily converted to the rotary movement via the crank mechanism.

According to another embodiment of the present invention defined by Claim 9, the movement converter mechanism comprises a crank mechanism adapted to amplify the linear back-and-forth movement of the movable magnet and then to convert the linear back-and-forth movement to the rotary movement. With this arrangement, the back-and-forth linear movement of the movable magnet can be easily amplified by the lever member and converted to the rotary movement of the crank mechanism.

According to another embodiment of the present invention defined by Claim 10, the movement converter mechanism comprises a rack-and-pinion mechanism adapted to convert the back-and-forth linear movement to the rotary movement in one direction. With this arrangement, the pinion may be engaged with the back-and-forth linearly moving rack to convert the back-and-forth linear movement of the pinion to the rotary movement in one direction via the well known mechanism. In addition, the magnet serving to intensify the magnetic force of the drive system when the pinion is rotating in the forward direction may be used to intensify the magnetic force of the drive system which would otherwise be weakened when rotation of the pinion is inverted in the backward direction. In this way, the rotary movement can be efficiently assured to be continued.

According to another embodiment of the present invention defined by Claim 11, the movable magnet is back-and-forth movably arranged relatively to the stationary magnet and said movable magnet is provided on its rotary shaft with a permanent magnet and along its outer periphery with an electromagnet so that the polarity of the electromagnet may be inverted to rotate the movable magnet relative to the stationary magnet. With this arrangement, the magnetic force of the movable magnet provided in the form of an electromagnet and adapted to rotate relatively to the stationary magnet can be intensified and the correspondingly powerful rotary movement thereof can be assured.

According to another embodiment of the present invention defined by Claim 12, the movable magnet provided in the form of a permanent magnet so as to cooperate with the stationary magnet provided in the form of an electromagnet and the system further includes, in the vicinity of the stationary magnet, a magnetic force intensifying permanent magnet adapted to be reversibly rotated in synchronization with polarity inversion of the electromagnet. With this arrangement, in response to inversion of the polarity of the stationary magnet provided in the form of an electromagnet, the polarity of the permanent magnet is inverted and, in consequence, the stationary magnet can maintain a high magnetic force. In this way, the movable magnet provided in the form of a permanent magnet can be driven by a powerful drive force.

According to another embodiment of the present invention defined by Claim 13, one of the stationary magnet and said movable magnet is provided in the form of an electromagnet. With this arrangement, the electric power to be supplied to the electromagnet can be cut down and the construction of the stationary magnet or the movable magnet can be simplified.

According to another embodiment of the present invention defined by Claim 14, the rotary movement is used to drive a generator unit. With this arrangement, the generator unit can be efficiently and powerfully rotary-driven by the magnetic force of the permanent magnet.

### BRIEF DESCRIPTION OF THE DRAWINGS

Fig. 1 is a schematic diagram illustrating a first embodiment of a system according to the present invention.
Fig. 2 is a scale-enlarged schematic diagram illustrating a main section of the system according to a second embodiment of the present invention.
Fig. 3 is a schematic diagram illustrating the main section in the system according to a third embodiment of the present invention.
Fig. 4 is a schematic diagram illustrating the main section in the system according to a fourth embodiment of the present invention.
Fig. 5 is a schematic diagram a schematic diagram illustrating the main section in the system according to a fifth embodiment of the present invention.
Fig. 6 is a schematic diagram illustrating the main section in the system according to a sixth embodiment of the present invention.
Fig. 7 is a schematic diagram illustrating a seventh embodiment of the system according to the present invention.
Fig. 8 is a schematic diagram an eighth embodiment of the system according to the present invention.
Fig. 9 is a schematic diagram a ninth embodiment of the system according to the present invention.
Fig. 10 is a schematic diagram a tenth embodiment of the system according to the present invention.
Fig. 11 is a schematic diagram an eleventh embodiment of the system according to the present invention.
Fig. 12 is a schematic diagram a twelfth embodiment of the system according to the present invention.
Fig. 13 is a schematic diagram a thirteenth embodiment of the system according to the present invention.
Fig. 14 is a schematic diagram a fourteenth embodiment of the system according to the present invention.
Fig. 15 is a schematic diagram a fifteenth embodiment of the system according to the present invention.
Fig. 16 is a schematic diagram a sixteenth embodiment of the system according to the present invention.
Fig. 17 is a schematic diagram a seventeenth embodiment of the system according to the present invention.

### DETAILED DESCRIPTION OF THE PREFERRED EMBODIMENTS

Details of the present invention will be more fully understood from the description made hereunder exemplarily in reference to the accompanying drawings.

### Embodiment 1

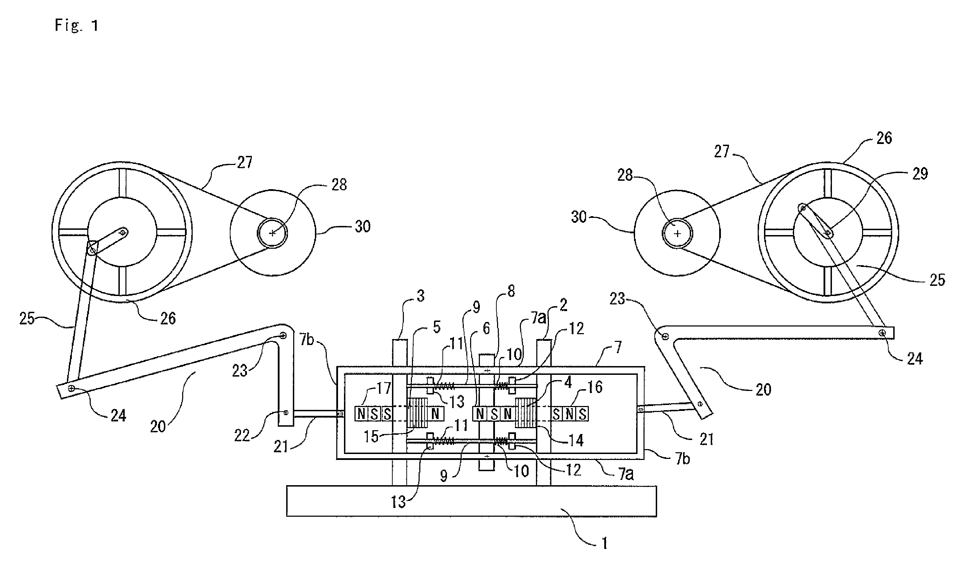

According to Embodiment 1 illustrated by Fig. 1, reference numeral 1 designates a system base on which magnet fixing plates 2, 3 are mounted so that these two magnet fixing plates 2, 3 are opposed to and spaced from each other. Stationary electromagnets 4, 5 opposed to each other are fixed on the respective magnet fixing plates 2, 3 and a permanent magnet 6 is back-and-forth movable between the stationary electromagnets 4. 5.

Reference numeral 7 designates a slide frame which is slidable on the magnet fixing plates 2, 3 and, according to the present embodiment, this slide frame 7 has a rectangular shape which is relatively long in a transverse direction. The slide frame 7 has horizontal frame segments 7a adapted to be slidable relatively to the magnet fixing plates 2, 3 and vertical frame segments 7b respectively lie outside the magnet fixing plates 2, 3. The horizontal frame segments 7a are provided in its middle region with a movable support plate 8 for the movable magnet 6 fixed thereto. The movable magnet 6 is attached to a middle region integrally with the movable support plate 8 so as to be movable integrally with the movable support plate 8.

Between the magnet fixing plates 2, 3, spring mount bars 9, 9 extend through the movable support plate 8 and these spring mount bars 9, 9 are provided around them on both sides of the movable magnet support plate 8 with spring members 10, 11. These spring members 10, 11 define an elastically biasing mechanism adapted to come in contact with the movable support plate 8 and to bias the movable support plate 8 in opposite directions, respectively. Reference numerals 12, 13 designate repulsion force regulating members threadably mounted on the spring mount bars 9 and serving for positioning of the movable support plate 8.

Now magnetic attractive or repulsive force generated between the stationary electromagnets 4, 5, on one hand, and the movable magnet 6 opposed to the respective stationary electromagnets 4, 5, on the other hand will be described. When the stationary electromagnet 4 or 5 has magnetic polarity different from that of the movable magnet 6, an attractive force will be generated therebetween and when the stationary electromagnet 4 or 5 has the same magnetic polarity as that of the movable magnet 6, a repulsive force will be generated therebetween. In the case illustrated by Fig. 1, the rightmost polarity S of the movable magnet is different from the polarity of the right side stationary electromagnet 4 and the attractive force is generated therebetween. In consequence, the spring member 10 is compressed by the movable support plate 8 and stores its elastic force. In contrast, the leftmost polarity N of the movable magnet 6 is same as the polarity of the left side stationary electromagnet 4 and the repulsive force is generated therebetween.

Reference numerals 14, 15 respectively designate electromagnet coils including a magnetic force switching mechanism (not shown). Referring to Fig. 1, upon contact of the movable magnet 6 with the stationary electromagnet 4, the magnetic force of the stationary electromagnet 4 is switched by the magnetic force switching mechanism and thereby electric current flowing in the coil 15 is turned off or switched. As a result, the elastic biasing force of the spring member 10 cooperates with the magnetic repulsive force generated between the stationary electromagnet 4 and the movable magnet 6 to move the movable magnet 6 away from the stationary electromagnet 4. At the same time, under the effect of the electric current flowing in the coil 15 associated with the stationary electromagnet 5, the polarity of the stationary electromagnet 5 becomes opposite to the leftmost polarity of the movable magnet 6 and the attractive force is generated between these two magnets 5, 6.

Now the leftmost polarity of the movable magnet 6 is different from the polarity of the left side stationary electromagnet 5 and the attractive force generated between the magnets 5, 6 causes the movable support plate 8 to compress the spring member 11. When the stationary electromagnet 5 comes in contact with the movable magnet 6 under the biasing force stored in the spring member 11, the electric current flowing in the coil 15 switched so that the movable magnet 6 and the stationary electromagnet 5 opposed to each other may have same polarity. In consequence, the biasing force of the spring member 11 cooperates with the repulsive force generated between the magnets 5, 6, causing the movable magnet 6 to move away from the stationary electromagnet 5. Such movement of the movable magnet 6 is repeated to generate the desired high drive force.

Cores of the right and left stationary electromagnets 4, 5 are additionally provided with magnetic force intensifying permanent magnets 16, 17, respectively, so that magnetic force of the stationary electromagnets 4, 5 can be intensified with a relatively low level of power supplied to the coils of the respective stationary electromagnets 4, 5.

When the leftmost polarity of the stationary electromagnet 4 in Fig. 1 is N, the rightmost polarity of the permanent magnet 16 provided on the right end of this stationary electromagnet 4 is S and the leftmost polarity N of this stationary electromagnet 4 is intensified by the permanent magnet 16. As a result, the stationary electromagnet 4 powerfully attracts the movable magnet 6 having opposite polarity and the coil current of the coil 14 is turned off or switched by the magnetic force switching mechanism. Thereupon, the magnetic force of the leftmost polarity of the stationary electromagnet 4 is weakened or switched to the polarity S and, in any case, the stationary electromagnet 4 loses the force to attract the movable magnet 6 having the polarity S. Eventually, the movable magnet 6 moves away from the stationary electromagnet 4 under the biasing force of the spring member 10.

When the rightmost polarity of the stationary electromagnet 5 in Fig. 1 is N, the leftmost polarity of the permanent magnet 17 provided on the left end of this stationary electromagnet 5 is N and the magnetic force of the leftmost polarity N of this stationary electromagnet 5 is regulated by the permanent magnet 16 so the stationary electromagnet 5 may moderately repulse the movable magnet 6. Thereby the coil current flowing in the coil 15 is reversed by the magnetic force intensifying mechanism and the rightmost polarity N of the stationary electromagnet 5 is switched to S. This magnetic force is intensified by the permanent magnet 17 and the stationary electromagnet 5 powerfully attracts the movable magnet 6 having the polarity N. In consequence, the movable magnet 6 compresses the spring member 11 and the latter stores its biasing force.

Referring to Fig. 1, one end 22 of a lever member 20 adapted to back-and-forth rock around a spindle 23 is driven by a connector bar 21 interlocking with the slide frame 7 and a drive shaft member 29 of a crank mechanism 25 connected to the other end 24 of the lever member 20 is rotationally driven. Simultaneously, a driven wheel 28 is rotated via a rotation transmission mechanism 27 and thereby a generator unit 30 is driven. In this manner, the linearly reciprocating movement of the movable magnet 6 is amplified by the lever member 20 and transmitted to the crank mechanism 25 which, in turn, converts the linearly reciprocating movement to a rotational movement of a revolving wheel 26.

Alternatively, the linearly back-and-forth motion of the movable magnet 6 can be converted to the rotational motion by a rack-and-pinion mechanism comprising a linearly movable rack adapted to interlock with the slide frame 7 or the connector bar 21 and a pinion adapted to be engaged with the rack so that the linearly back-and-forth rotation of the pinion may be converted to rotation in one direction.

The stationary electromagnets 4, 5, the movable magnet 6 or the magnetic force intensifying permanent magnets 16, 17 may be dimensioned to be larger in diameter as well as in length to intense the magnetic force thereof correspondingly.

### Embodiment 2

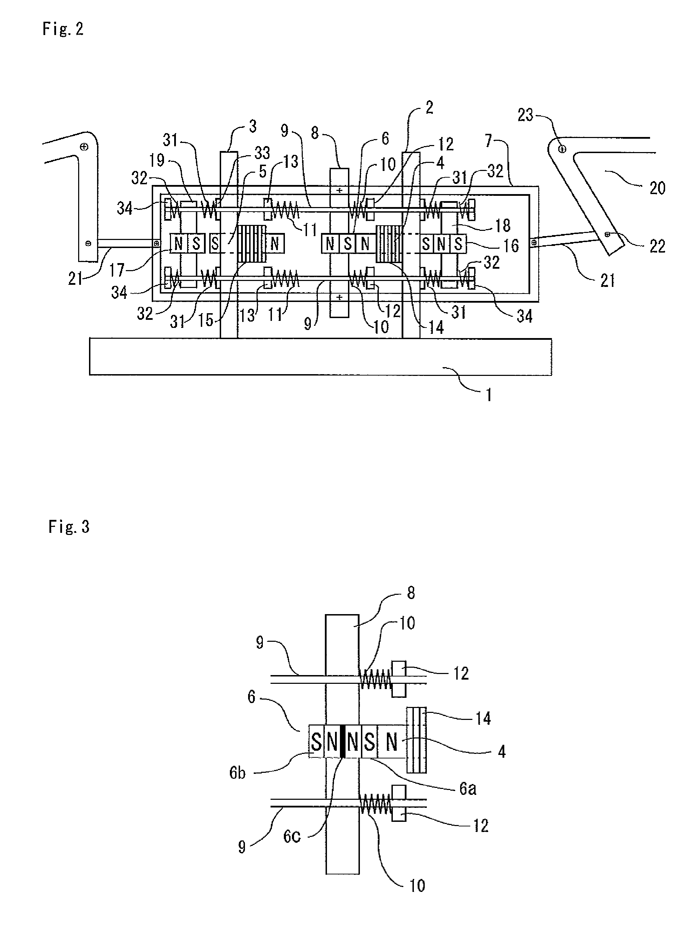

According to Embodiment 2 illustrated by Fig. 2, the magnetic force intensifying permanent magnets 16, 17 are mounted on movable mount plates 18, 19, respectively, which are, in turn, slidably mounted on segments of the spring mount bar 9 extending outward beyond the magnet fixing plates 2, 3, respectively so that these magnetic force intensifying permanent magnets 16, 17 may be moved to attractive positions and repulsive positions relative to the associated stationary electromagnets 4, 5, respectively, in response to switching of the magnetic force of these stationary electromagnets 4, 5. Specifically, when the stationary electromagnet 4 and the associated magnetic force intensifying permanent magnet 16 respectively have the opposite polarities and are attractive to each other as seen on the right side in Fig. 2, the magnetic force of this electromagnet 4 is intensified. In contrast, when the stationary electromagnet 5 and the associated magnetic force intensifying permanent magnet 17 have same polarity and are repulsive to each other as seen on the left side in Fig. 2, the permanent magnet 17 is spaced away from the stationary electromagnet 5 and, in consequence, an influence of the permanent magnet 17 upon the magnetic force of the stationary electromagnet 5 is weakened. Referring to Fig. 2, reference numerals 31, 32 designate cushioning spring members and reference numerals 33, 34 designate stoppers position-adjustably mounted on the spring mount bar 9.

### Embodiment 3

According to Embodiment 3 illustrated by Fig. 3, the movable magnet 6 comprises a pair of permanent magnets 6a, 6b respectively have polarities SN and NS arranged to sandwich a magnetic body 6c therebetween.

### Embodiment 4

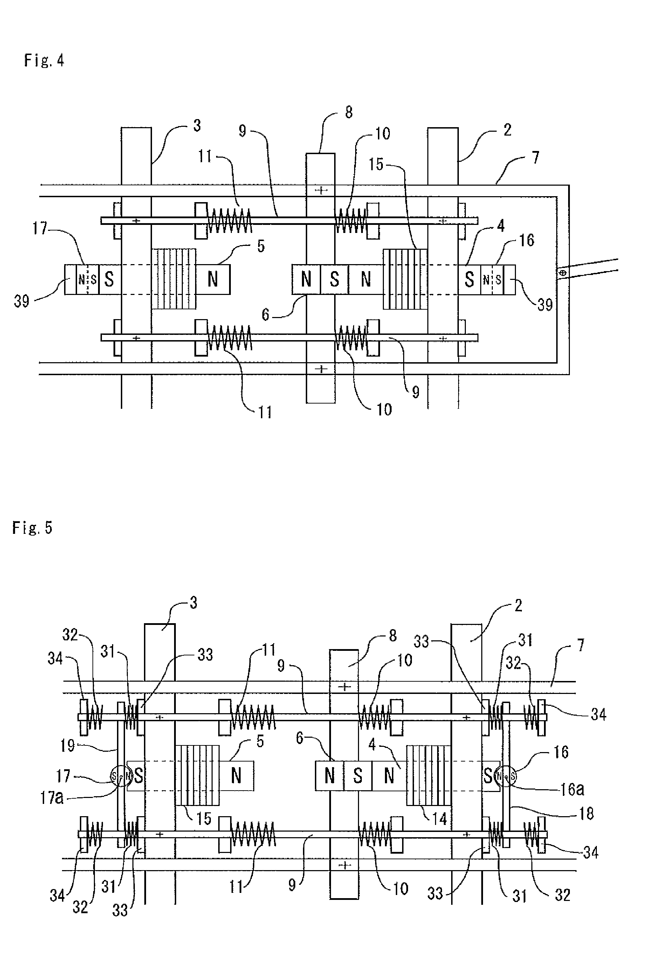

According to Embodiment 4 illustrated by Fig. 4, the magnetic force intensifying permanent magnets 16, 17 further comprise ferromagnetic bodies such as iron plates 39 so that the magnetic force of the stationary electromagnets 4, 5 may be intensified.

### Embodiment 5

According to Embodiment 5 illustrated by Fig. 5, the magnetic force intensifying permanent magnets 16, 17 are respectively mounted on the movable mount plates 18, 19 slidably mounted on the spring mount bar 9 so that the permanent magnets 16, 17 may rotate around respective axes of rotation. These magnetic force intensifying permanent magnets 16, 17 are movable between the attractive position and the repulsive position in response to magnetic polarity switching of the respective stationary electromagnets 4, 5. As will be apparent from Fig. 5, the magnetic force intensifying permanent magnets 16, 17 are rotated in synchronization with switching of the coil current flowing in the coils 14, 15 of the electromagnets so that the magnetic polarity of the stationary electromagnets 4, 5 and the magnetic polarity of the magnetic force intensifying permanent magnets 16, 17 may be attractive to each other to assure that the magnetic force of the stationary electromagnets 4, 5 may be continuously intensified. Reference numerals 31, 32 designate cushioning springs and reference numerals 33, 34 designate position-adjustable stoppers.

### Embodiment 6

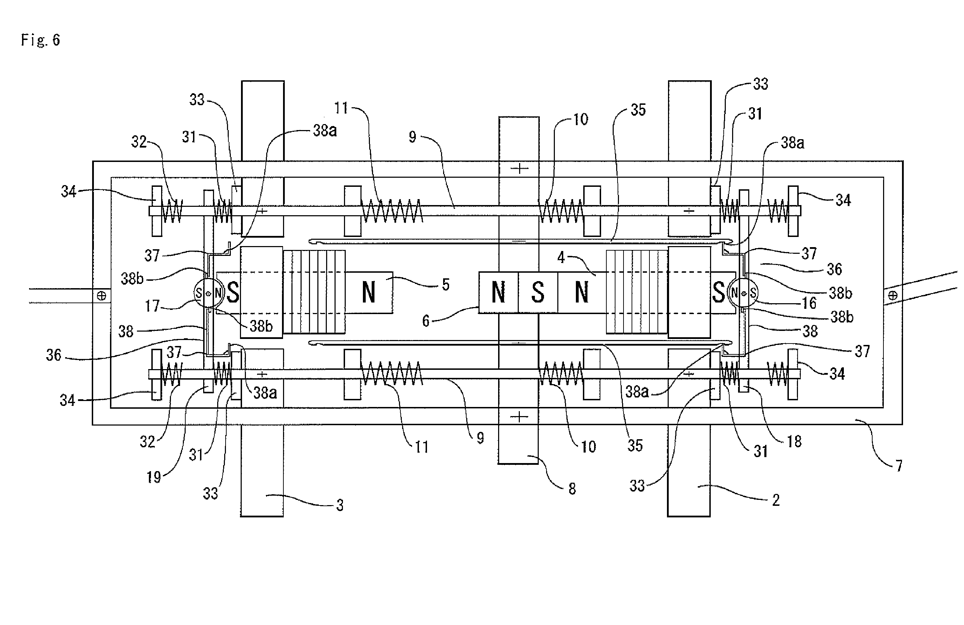

According to Embodiment 6 illustrated by Fig. 6, the movable mount plates 18, 19 are provided with stopper devices 36 detachably engaged with associated interlocking bars 35 adapted to interlock with the movable support plate 8 for the movable magnet 6. When the respective magnetic force intensifying permanent magnets 16, 17 compress the associated spring members 31 until the permanent magnets 16, 17 come in magnetic contact with the associated stationary electromagnets 4, 5 which, in turn, fully attract the movable magnet 6, the stopper devices 36 lock the interlocking bars 35, allowing the repulsive force of the spring members 31 to be transmitted by intermediary of the interlocking bars 35 to the movable support plate 8. The polarity of the stationary electromagnets 4, 5 is reversed and simultaneously the polarity of the permanent magnets 16, 17 also is reversed. Thereupon, the stopper devices 36 are unlocked, allowing the repulsive force of the spring members 31 to be transmitted by the intermediary of the interlocking bars 35 to the movable support plate 8.

According to this Embodiment 6, each of the stopper devices 36 comprises a stopper member 38 adapted to swing around a fulcrum shaft 37. The stopper device 36 has a pair of stopping ends 38a adapted to be engaged with the respective interlocking bars 35 and a pair of releasing ends 38b adapted to come in contact with stopper engagement/disengagement means of the respective permanent magnets 16, 17. The interlocking bars 35 are alternately engaged with and disengaged from the stopper device 36 in response to rotation of the permanent magnets 16, 17.

### Embodiment 7

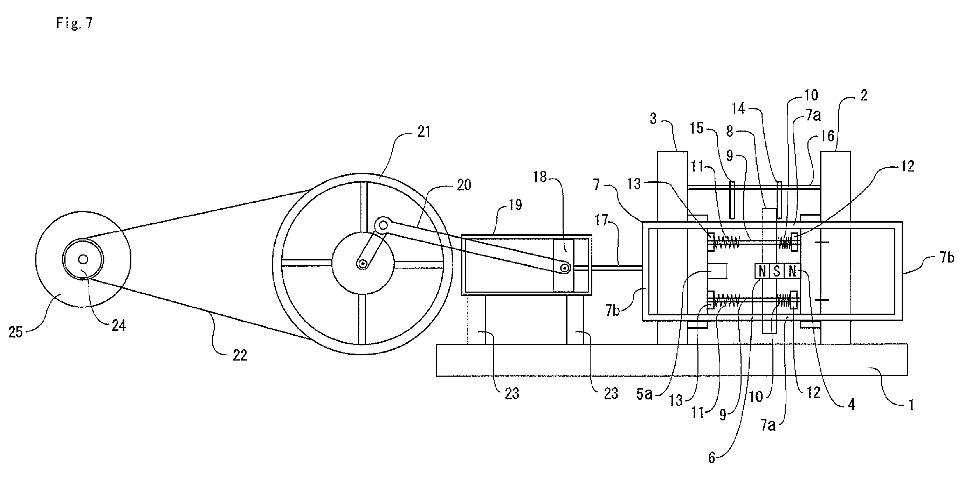

According to Embodiment 7 illustrated by Fig. 7, reference numeral 1 designates the system base on which the magnet fixing plates 2, 3 are mounted so that these magnet fixing plates 2, 3 are opposed to each other at a predetermined distance from each other. The stationary electromagnet 4 is fixed on the magnet fixing plate 2 and the movable magnet 6 facing the stationary electromagnet 4 is back-and-forth movable between the magnet fixing plates 2, 3. Reference numeral 5a designates a stopper mounted on the magnet fixing plate 3. While not shown in Fig. 7, the stationary electromagnet 4 and/or the movable permanent magnet 6 are additionally provided with the magnetic force intensifying permanent magnet(s).

Reference numeral 7 designates a slide frame which is slidable on the magnet fixing plates 2, 3 and, according to the present embodiment, this slide frame 7 has a rectangular shape which is relatively long in a transverse direction. The slide frame 7 has horizontal frame segments 7a adapted to be slidable relatively to the magnet fixing plates 2, 3 and vertical frame segments 7b respectively lie outside the magnet fixing plates 2, 3. The horizontal frame segments 7a are provided in its middle region with a movable support plate 8 for the movable magnet 6 fixed thereto. The movable magnet 6 is attached to a middle region integrally with the movable support plate 8 so as to be movable integrally with the movable support plate 8.

Between the magnet fixing plates 2, 3, spring mount bars 9, 9 extend through the movable support plate 8 and these spring mount bars 9, 9 are provided around them on both sides of the movable magnet support plate 8 with spring members 10, 11. These spring members 10, 11 define an elastically biasing mechanism adapted to come in contact with the movable support plate 8 and to bias the movable support plate 8 in opposite directions, respectively. Reference numerals 12, 13 designate repulsion force regulating members threadably mounted on the spring mount bars 9 and serving for positioning of the movable support plate 8.

Now magnetic attractive or repulsive force generated between the stationary electromagnets 4, 5, on one hand, and the movable magnet 6 opposed to the respective stationary electromagnets 4, 5, on the other hand will be described. When the stationary electromagnet 4 or 5 has magnetic polarity different from that of the movable magnet 6, an attractive force will be generated therebetween and when the stationary electromagnet 4 or 5 has the same magnetic polarity as that of the movable magnet 6, a repulsive force will be generated therebetween. In the case illustrated by Fig. 1, the rightmost polarity S of the movable magnet 6 is different from the polarity of the right side stationary electromagnet 4 and the attractive force is generated therebetween. In consequence, the spring member 10 is compressed by the movable support plate 8 and stores its elastic force.

Reference numerals 14, 15 respectively designate magnetic polarity switches provided in the vicinity of the stationary magnet 4 and the stopper 5a, respectively. Referring to Fig. 7, upon contact of the movable support plate 8 with the switch 14 in the vicinity of the stationary electromagnet 4, the magnetic polarity of the stationary electromagnet 4 is switched to the same polarity of the movable magnet 6. In consequence, the movable magnet 6 is moved toward the stopper 5a under the biasing force of the spring members 10 cooperating with a strong repulsive force between the magnets 4, 6 so as to generate a high drive force.

The polarity switching switches 14, 15 are position-adjustably mounted on a switch mounting member 16 extending between the magnet fixing plates 2, 3.

The spring members 11 are then compressed by the movable support plate 8 supporting the movable magnet 6 and store the resiliently biasing force. Upon contact of the movable support plate 8 with the switch 15 in the vicinity of the stopper 5a, the polarity of the stationary electromagnet 4 is inverted with respect to the polarity of the movable magnet 6. In consequence, the movable magnet 6 moves toward the stationary electromagnet 4 under the effect of the resiliently biasing force of the spring members 11 cooperating with the inter-magnet repulsive force. In this way, the state of Fig. 1 is reestablished. Simultaneously, the polarity of the stationary electromagnet 4 is inverted with respect to the rightmost polarity of the movable magnet 6 and, in consequence, a repulsive force is generated between them. Such movement of the movable magnet 6 is repeated to generate the desired high drive force.

As will be apparent from this seventh embodiment, should any one of the stationary electromagnets 4, 5 is absent or not function in the embodiments 1 through 6, the system according to the present invention can properly function.

While it is possible to modify Embodiments 1 though 6 so that the movable magnet 6 also is provided in the form of the electromagnet adapted to have magnetic force as well magnetic polarity being controllable, the movable magnet 6 used in these embodiments is the permanent magnet having its magnetic force as well as its magnetic polarity being substantially constant. In contrast, the stationary magnets 4, 5 are provided in the electromagnets having the respective polarities adapted to be switched by the switches 14, 15 of the polarity switching mechanism or the automatic switching mechanism and the respective magnetic forces adapted to be controlled by the coil current. Obviously it is also possible to provide the stationary magnets 4, 5 in the form of permanent magnets and to provide the movable magnet 6 in the form of an electromagnet adapted to have its polarity switched by an appropriate magnetic force switching mechanism.

### Embodiment 8

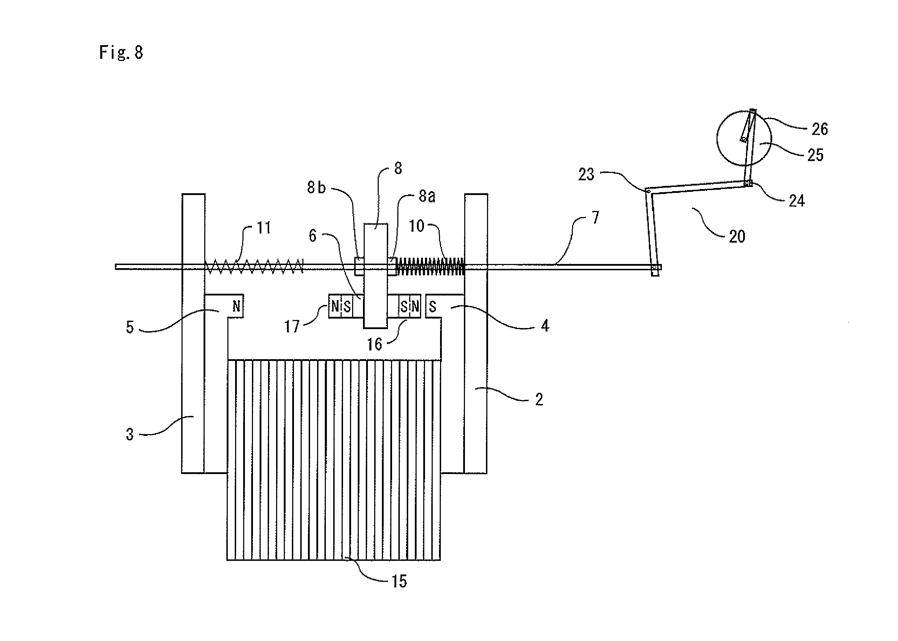

According to Embodiment 8 illustrated by Fig. 8, the arrangement of Embodiment 7 is further simplified so that the movable magnet 6 provided with the magnetic force intensifying permanent magnets 16, 17 is integrated with the movable support plate 8. The movable support plate 8 is position-adjustably mounted on the slidable frame 7 which is slidably mounted on the magnet fixing plates 2, 3 by the intermediary of mounting members 8a, 8b provided on both sides of the movable support plate 8. Reference numerals 10, 11 designate spring members mounted on the slide frame 7 on both sides of the movable support plate 8.

Reference numerals 4, 5 designate lateral segments of a stationary electromagnet having opposite polarities and an intermediate segment defined between them carries the coil 15 wound thereon. Referring to Fig. 8, the right side segment 4 attracts the movable magnet 6 having its polarity opposite to that of the segment 4 rightward against a resiliently biasing force of the spring member 10. Upon inversion of the polarity of the segments 4, 5, the movable magnet 6 moves leftward under the effect of a repulsive force generated between the magnet segment 4 and the movable magnet 6 and the resilient biasing force of the spring member 10. The movable magnet 6 further moves leftward as the magnet segment 5 having its polarity inverted attracts the movable magnet 6 against a resiliently biasing force of the spring member 11. In this way, a linear back-and-forth movement of the slide frame 7 is achieved.

This linear back-and-forth movement of the slide frame 7 can be converted to the desired rotational movement via the lever member 20, the crank mechanism 25 and the rack-and-pinion mechanism (not shown) comprising a rack adapted to interlock with the slide frame and a pinion adapted to be engaged with this rack. In this way, the electromagnetic drive system according to the present invention is obtained.

### Embodiment 9

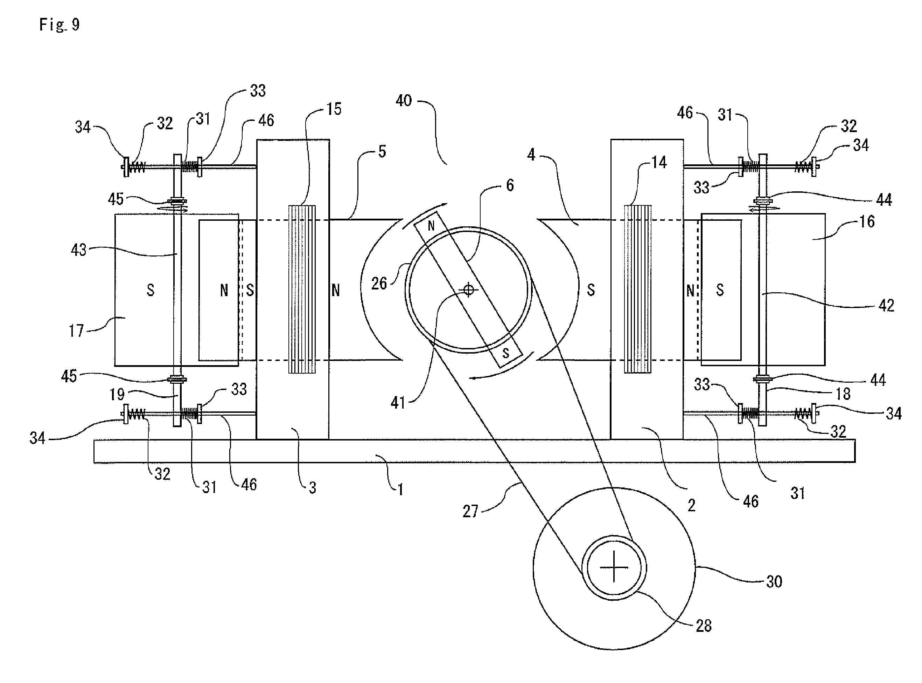

According to Embodiment 9 illustrated by Fig. 9, the movable magnet 6 included in an electromagnetic drive system's main body 40 is provided in the form of a permanent magnet adapted to rotate around a rotary shaft 41 between respective circularly concave inner ends of two stationary electromagnets 4, 5 having opposite polarities adapted to be respectively switched. Respective outer ends of the stationary electromagnets 4, 5 are also circularly concaved and, along these circularly concaved ends, magnetic force intensifying permanent magnets 16, 17 are rotatably mounted on spindles 42, 43 mounted on the movable mount plates 18, 19. Reference numerals 44, 45 designate drive members adapted to interlock the spindles 42, 43 with a revolution drive for the permanent magnets 16, 17 in synchronization with inversion of the polarities of the stationary electromagnets 4, 5. The movable mount plates 18, 19 are movably mounted on support bars 46 mounted on the support bars 46, respectively. Reference numerals 31, 32 designate cushioning springs and reference numerals 33, 34 designate position-adjustable stoppers.

In the state illustrated by Fig. 9, the polarity of the movable permanent magnet 6 facing the left side of the stationary electromagnet 5 is same as the left side polarity of the stationary electromagnet 5. As a result, a forceful repulsion is generated between them. Similarly, the polarity of the movable permanent magnet 6 facing the right side of the stationary electromagnet 4 is same as the right side polarity of the stationary electromagnet 4. As a result, a forceful repulsion is generated between them. At the same time, the polarity of the movable magnet 6 and the polarity of the stationary electromagnets 4, 5 toward which the movable magnet 6 is rotating in NS- or SN-relation and therefore the movable magnet 6 and the stationary electromagnets 4, 5 attract one another. In this way, the movable magnet 6 is positively clockwise rotated around a rotary shaft 41 as indicated by arrows.

In response to rotation of the movable magnet 6 from the position illustrated by Fig. 9 to substantially horizontal position, the electric current flowing in the coils 14, 15 of the respective stationary electromagnets 4, 5 is inverted by the magnetic polarity switching mechanism. Simultaneously the magnetic force intensifying permanent magnets 16, 17 rotate by 180° and the polarity of the stationary electromagnets 4, 5 is inverted. Even when the movable magnet 6 has rotated from the position illustrated by Fig. 9 to the substantially horizontal position, the movable magnet 6 is still under an inertial torque and positively repulsed by the stationary electromagnets 4, 5. In this manner, the movable magnet 6 is continuously driven to rotate. Rotational drive force of the movable magnet 6 is amplified and transmitted via the revolving wheel 26 and the rotation transmitting mechanism 27 to be used, for example, to rotationally drive the generator unit 30.

### Embodiment 10

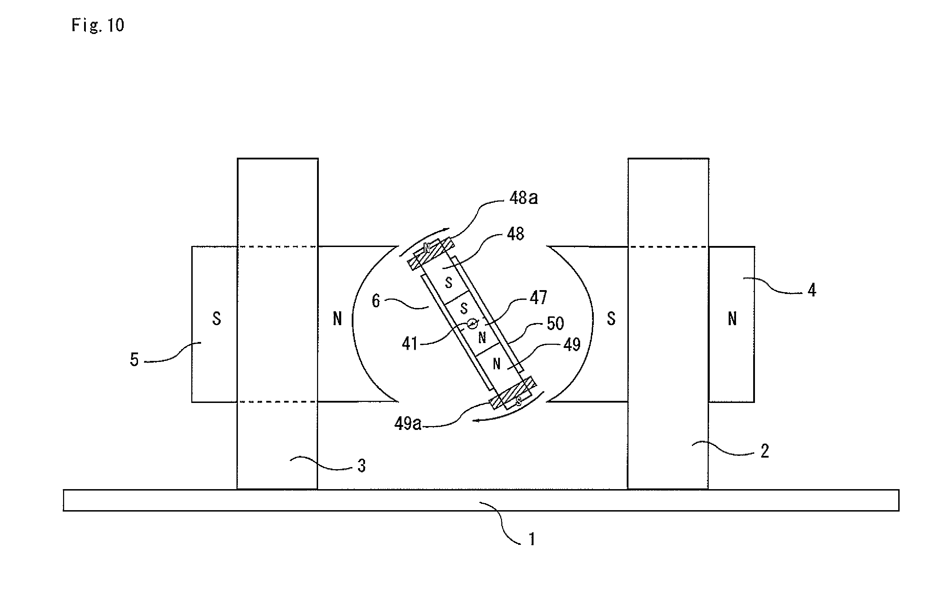

According to Embodiment 10 illustrated by Fig. 10, the movable magnet 6 comprises a magnetic force intensifying permanent magnet 47 mounted on the rotary shaft 41 and electromagnets 48, 49 having opposite polarities adapted to be switched, respectively, and attached to opposite ends of the aforementioned permanent magnet 47 by fastener members 50. This movable magnet 6 is interposed between the stationary permanent magnets 4, 5 respectively having opposite polarities and fixed to the magnet fixing plates 2, 3 of the system base 1. With such arrangement, a direction in which electric current flows in each of coils 48a, 49a associated with the stationary electromagnets 4, 5, respectively, is switched and thereby the movable magnet 6 is rotationally driven. According to Embodiment 10, it is possible to provide the stationary electromagnets 4, 5 with ferromagnetic members such as permanent magnets or iron plates for the purpose of intensifying the magnetic force.

### Embodiment 11

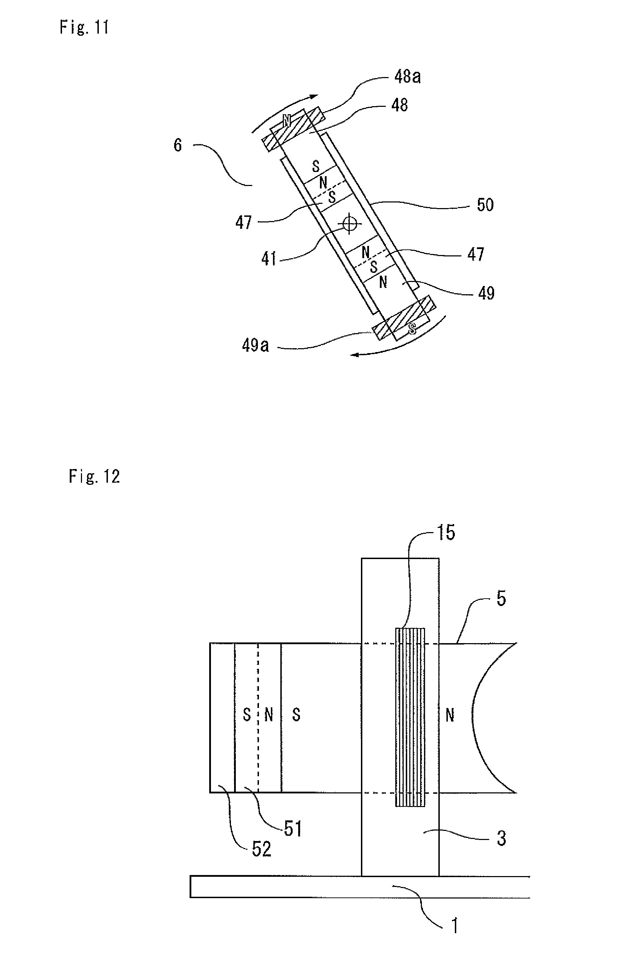

According to Embodiment 11 illustrated by Fig. 11, the respective electromagnets 48, 49 in Embodiment 10 are provided with magnetic force intensifying permanent magnets 47.

### Embodiment 12

According to Embodiment 12 illustrated by Fig. 12, the stationary magnet 5 is provided with a magnetic force intensifying permanent magnet 51 and a ferromagnetic body 52 formed by an iron plate. It is also possible to provide the stationary magnet 5 in the form of an electromagnet having the coil 15 wound around it.

### Embodiment 13

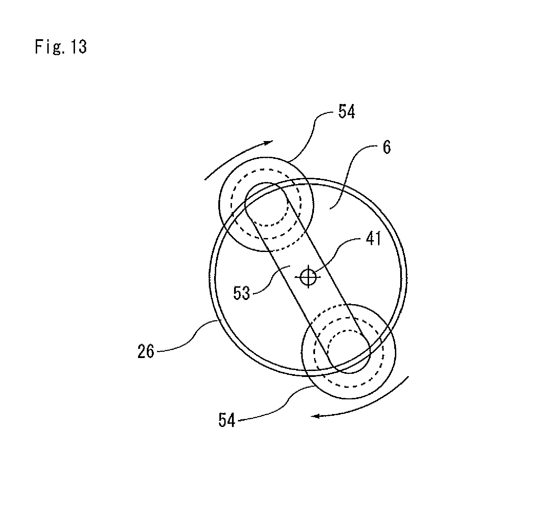

According to Embodiment 13 illustrated by Fig. 13, the movable magnet 6 comprises a permanent magnet 54 attached to opposite ends of the magnetic force intensifying iron plate 53 adapted to rotate around the rotary shaft 41.

### Embodiment 14

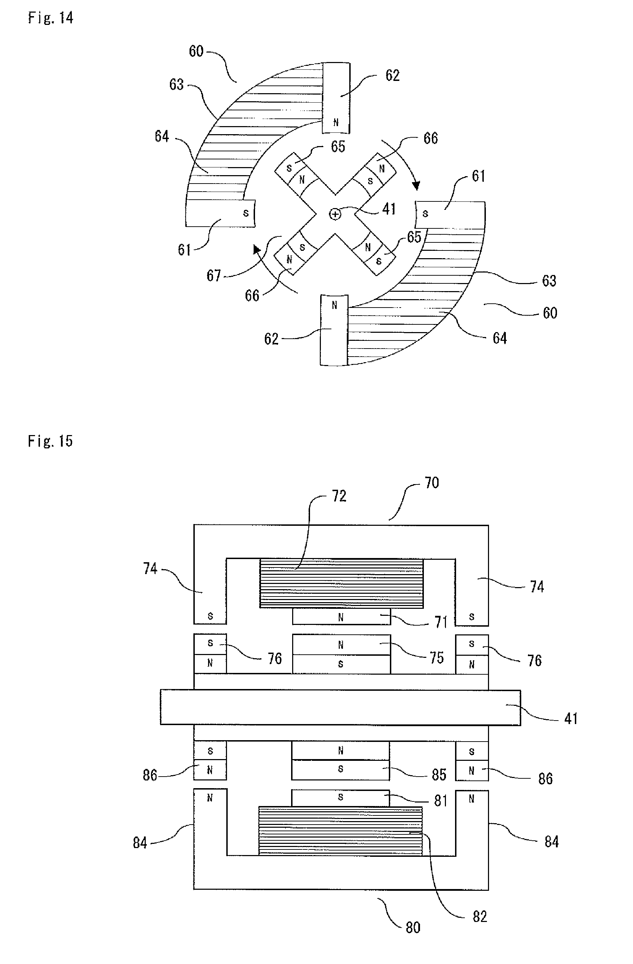

Embodiment 14 illustrated by Fig. 14 comprises a pair of stationary permanent magnets 60 each having S-pole 61 and N-pole 62 on its opposite ends and a circular arc-shaped intermediate section 63 carrying a coil 64 wound therearound so that S-pole 61 and N-pole 62 alternate at a circumferential interval of 90°, on one hand, and a movable permanent magnet 67 having S-pole 65 and N-pole 66 alternate at a circumferential interval of 90° around the rotary shaft 41, on the other hand. With such arrangement, high torque can be assured with relatively low power consumption for the coil 64.

### Embodiment 15

According to Embodiment 15 illustrated by Fig. 15, a pair of T-shaped stationary magnets 70, 80 are opposed to each other so as to define a substantially quadrangular shape and coils 72, 82 are wound around respective shanks 71, 81 of these T-shaped magnets so that the shanks 71, 81 of these electromagnets 70, 80 may be excited to have one polarity and lateral segments 74, 84 of these electromagnets 70, 80 may be excited to have the opposite polarity. The movable magnet mounted on the rotary shaft 41 comprises permanent magnets 75, 85 respectively facing the aforementioned shanks 71, 81 of the stationary electromagnets 70, 80 and permanent magnets 76, 86 respectively facing the aforementioned lateral segments 74, 84 of the stationary electromagnets 70, 80. Both poles of the respective stationary electromagnets 70, 80 may be actuated to achieve efficient rotary drive of the movable magnet.

### Embodiment 16

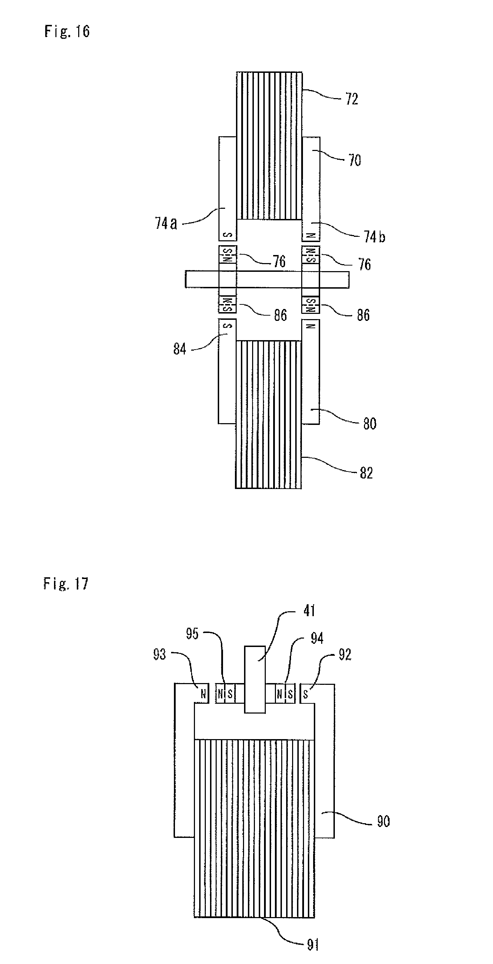

According to Embodiment 16 illustrated by Fig. 16, a pair of U-shaped stationary magnets 70, 80 are opposed to each other so as to define a substantially quadrangular shape and coils 72, 82 are wound around respective bridge-like segments 71, 81 of these U-shaped magnets so that opposite lateral segments 74a, 74b; 84a, 84b of these electromagnets may be excited to have opposite polarities. A pair of permanent magnets 76, 86 provided with magnetic force intensifying permanent magnets are mounted on the rotary shaft 41 as the movable magnet so that the polarities of the aforementioned stationary magnets 70, 80 may be inverted to achieve the efficient rotary drive of the movable magnet.

### Embodiment 17

According to Embodiment 17 illustrated by Fig. 17, a coil 91 is wound around a bridge-like segment of a single U-shaped stationary magnet 90 to form an electromagnet of which opposite lateral segments 92, 93 may be excited to have polarities opposite to each other. Permanent magnets 94, 95 provided with magnetic force intensifying permanent magnets are mounted around the rotary shaft 41 as the movable magnet. With such simplified arrangement, the polarities of the aforementioned stationary magnet 90 may be inverted to achieve the efficient rotary drive of the movable magnet.

### Identification of reference numerals used in the drawings

- 1: base for system
- 2, 3: magnet fixing plates
- 4, 5: stationary magnets
- 6: movable magnet
- 7: slide frame
- 8: movable support plate
- 9: spring mount bar
- 10, 11: spring member
- 12, 13: repulsion force regulating members
- 14, 15: coils
- 16, 17: magnetic force intensifying permanent magnets
- 18, 19: movable mount plates
- 20: lever member
- 21: connector bar
- 22: one end
- 23: spindle
- 24: the other end
- 25: crank mechanism
- 26: revolving wheel
- 27: rotation transmission mechanism
- 28: driven wheel
- 29: drive shaft member
- 30: generator unit
- 31,32: spring members
- 33, 34: stoppers
- 35: interlocking bar
- 36: stopper means
- 37: fulcrum shaft
- 38: stopper member
- 39: iron plate
- 40: electromagnetic driving main body
- 41: rotary shaft
- 42, 43: rotary shafts
- 44, 45: driving members
- 46: supporting bar
- 47: permanent magnet
- 48, 49: electromagnets
- 50: magnet fixing member
- 51: permanent magnet
- 52: iron plate
- 53: iron plate
- 54: permanent magnet
- 60: stationary magnet
- 64: coil
- 67: movable magnet
- 70: stationary magnet
- 71: central segment
- 72: coil
- 74: lateral segments
- 75: permanent magnet
- 76: permanent magnet
- 80: stationary magnet
- 81: central segment
- 82: coil
- 84: lateral segments
- 85: permanent magnet
- 86: permanent magnet
- 90: stationary magnet
- 91: coil
- 94, 95: permanent magnets

## Claims

1. A magnetic force intensifying electromagnetic drive system adapted to achieve continuous rotation or back-and-forth movement of a movable magnet relative to a stationary magnet by inverting polarities of at least one of said movable magnet and said stationary magnet, said magnetic force intensifying electromagnetic drive system being **characterized in that** said movable magnet or said stationary magnet is provided with a magnetic force intensifying permanent magnet.

2. The magnetic force intensifying electromagnetic drive system defined by Claim 1 wherein said movable magnet or said stationary magnet to be polarity-inverted is provided in the form of an electromagnet including a coil wound therearound so that coil current direction may be inverted or coil current may be turned on or off to invert the polarity.

3. The magnetic force intensifying electromagnetic drive system defined by Claim 1 or 2 wherein said movable magnet or said stationary magnet provided in the form of electromagnet including magnetic force intensifying permanent magnet.

4. The magnetic force intensifying electromagnetic drive system defined by any one of Claims 1 through 3 wherein said magnetic force intensifying permanent magnet is provided with ferromagnetic body.

5. The magnetic force intensifying electromagnetic drive system defined by any one of Claims 1 through 4 wherein:
said movable magnet is back-and-forth movably arranged relatively to said stationary magnet and provided with a spring mechanism serving to bias said movable magnet in a direction of inversion; and
said system further comprises a polarity switching mechanism provided in the vicinity of said stationary magnet serving to switch the polarity of said movable magnet or said stationary magnet and a movement converter mechanism serving to convert back-and-forth linear movement of said movable magnet to rotary movement in one direction.

6. The magnetic force intensifying electromagnetic drive system defined by any one of Claims 1 through 5 wherein said movable magnet and said stationary magnet are arranged one-on-one.

7. The magnetic force intensifying electromagnetic drive system defined by any one of Claims 1 through 6 wherein the single movable magnet is provided between a pair of the stationary magnet.

8. The magnetic force intensifying electromagnetic drive system defined by any one of Claims 5 through 7 wherein said movement converter mechanism comprises a crank mechanism adapted to interlock with said movable magnet and thereby to convert the back-and-forth linear movement to the rotary movement in one direction.

9. The magnetic force intensifying electromagnetic drive system defined by Claim 8 wherein said movement converter mechanism comprises a crank mechanism adapted to amplify the linear back-and-forth movement of said movable magnet and then to convert the linear back-and-forth movement to the rotary movement.

10. The magnetic force intensifying electromagnetic drive system defined by any one of Claims 5 through 7 wherein said movement converter mechanism comprises a rack-and-pinion mechanism adapted to convert the back-and-forth linear movement to the rotary movement in one direction.

11. The magnetic force intensifying electromagnetic drive system defined by any one of Claims 1 through 4 wherein:
said movable magnet is back-and-forth movably arranged relatively to said stationary magnet; and
said movable magnet is provided on its rotary shaft with a permanent magnet and along its outer periphery with an electromagnet so that the polarity of said electromagnet may be inverted to rotate said movable magnet relative to said stationary magnet.

12. The magnetic force intensifying electromagnetic drive system defined by Claim 11 wherein:
said movable magnet provided in the form of a permanent magnet so as to cooperate with said stationary magnet provided in the form of an electromagnet; and
said system further includes, in the vicinity of said stationary magnet, a magnetic force intensifying permanent magnet adapted to be reversibly rotated in synchronization with polarity inversion of said electromagnet.

13. The magnetic force intensifying electromagnetic drive system defined by any one of Claims 1 through 12 wherein one of said stationary magnet and said movable magnet is provided in the form of an electromagnet.

14. The magnetic force intensifying electromagnetic drive system defined by any one of Claims 1 through 13 wherein said rotary movement is used to drive a generator unit.
